# EUROPEAN PATENT SPECIFICATION

(11) **EP 4 177 032 B1**
(45) Date of publication and mention of the grant of the patent: **16.10.2024**
(21) Application number: 22205159.1
(22) Date of filing: 02.11.2022
(51) Int. Cl.: B29B 17/02, B07C 5/342

(54) **METHOD AND DEVICE FOR SORTING MIXED PLASTIC PACKAGING WASTE COMPRISING PE, PET, PP, PS, MPO AND FILMS**
VERFAHREN UND VORRICHTUNG ZUM SORTIEREN VON GEMISCHTEN KUNSTSTOFFVERPACKUNGSABFÄLLEN AUS PE, PET, PP, PS, MPO UND FOLIEN
PROCEDE ET DISPOSITIF DE TRI DE DECHETS D'EMBALLAGES PLASTIQUES MIXTES COMPRENANT PE, PET, PP, PS, MPO ET FILMS

(30) Priority: 03.11.2021 BE 202105854
(43) Date of publication of application: 10.05.2023
(73) Proprietor: Indaver Plastics Recycling nv, 2830 Willebroek (BE)
(72) Inventor: GODDAERT, Eric, 2830 Willebroek (BE); MEYVIS, Eline, 2830 Willebroek (BE)
(74) Representative: Brantsandpatents bv

(56) References cited:
- EP-A1- 0 530 934
- EP-A1- 2 384 873
- DE-A1- 10 256 305
- US-A- 5 344 026
- US-A1- 2004 044 436

## Description

### TECHNICAL FIELD

The invention relates to a method and device for sorting mixed plastic packaging waste comprising PE, PET, PP, PS, MPO and films.

### PRIOR ART

Plastic packaging waste exists in many forms including hard plastic packaging, plastic bottles and plastic containers, pots, tubs, trays, saucers and lids. The plastic packaging waste may also still contain remnants of the original contents of the packaging, such as, for example, food residues. Different types of plastic packaging waste are usually collected together, often together with non-ferrous metal waste, ferrous metal waste and beverage carton waste, and only then offered for recycling. However, such offered mixed packaging waste must first be sorted into the individual main types of packaging waste (beverage carton, non-ferrous metal, ferrous metal and plastic waste) before proceeding to efficient recycling of mixed plastic packaging waste thus obtained. When recycling mixed plastic packaging waste, the challenge is to be able to distinguish the various types of plastic packaging waste (material) in a reliable and efficient manner.

For example, KR102038807B1 describes a method for sorting recyclable waste for any plastic material, comprising: a first step of opening a garbage bag and sorting plastics from an opened garbage bag using a first rotary separator; a second step of sorting the plastics separately into small, medium and large sizes using a second rotary separator; a third step of detecting and sorting PS from the small plastics using a first optical sorter; a fourth step of sequentially performing a process of detecting and sorting PET from the medium-sized plastics using a second optical sorter, detecting and sorting PE using a third optical sorter, and detecting and sorting PP using a fourth optical sorter; a fifth step of separating PP from the large-sized plastics; a sixth step of collecting waste remaining in the third step and the fourth step and sorting PP using a fifth optical sorter; and a seventh step of circulating waste remaining in the sixth step through a process of detecting PET using the second optical sorter in the fourth step.

KR102038807B1 shows, among other things, the problem that when sorting recyclable plastic materials, no distinction is made between different colors in which a recyclable plastic material of a specific polymer type (PET, PP, PE, PS, etc.) can be made. Document EP2384873 discloses a method and device for producing plastic recyclates from shred plastic waste. The method involves the usage of various optical sorters based on the NIR spectrum and the colour.

The present invention aim to resolve at least some of the above-mentioned problems.

### SUMMARY OF THE INVENTION

In a first aspect, the present invention relates to a method for sorting mixed plastic packaging waste comprising PE, PET, PP, PS, MPO and films, according to claim 1.

The measure of further separating PET plastic waste on the basis of structure (trays) and subsequently color allows a more targeted sorting and subsequent more targeted recycling of PET plastic waste. This is of great importance since certain structures such as trays or certain colors, such as blue, or the absence of color, are a distinguishing characteristic for the applicability of PET plastic packaging material for specific applications.

Preferred embodiments of the method are set out in claims 2-10.

A particular preferred embodiment of the invention relates to a device according to claim 3. This namely has the advantage of obtaining a higher degree of purity of the sorted fractions.

In a second aspect, the present invention relates to a device according to claim 11. This device has, among other things, the further optional advantage that a higher degree of purity of the sorted fractions can be obtained by adjusting the sequence of the PET trays and clear PET or blue PET and colored PET plastics to be sorted.

Preferred embodiments of the method are described in dependent claims 12-14.

In a third aspect, the present invention relates to a use according to claim 15.

### DESCRIPTION OF THE FIGURE

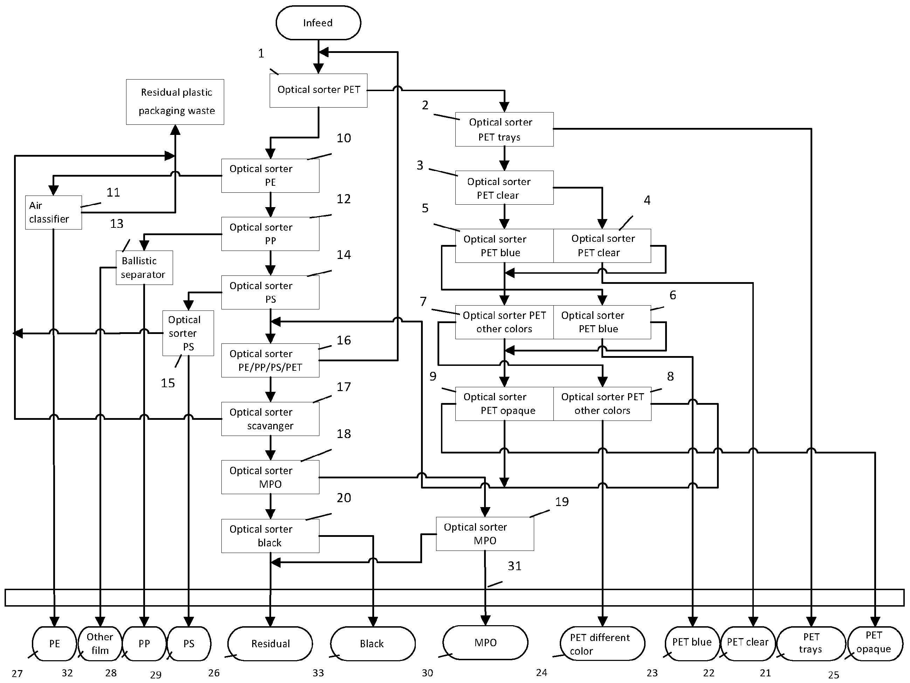

**Figure 1** shows a schematic representation for sorting mixed plastic packaging waste according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

The term "packaging waste," as used in this text, is to be understood as waste from packaging, and in particular from packaging made of one or more materials selected from the group of cardboard, plastic, ferrous metals and/or non-ferrous metals. Said materials are characterized in that they are highly suitable for reuse. Non-limiting examples of packaging waste types are film-shaped plastic waste, PP plastic waste, colorless or colored PET plastic waste, PE plastic waste, MPP plastic waste, non-ferrous metal waste, ferrous metal waste and beverage carton waste. Packaging waste may possibly carry remnants of the original contents of a packaging in question, such as food residues, for example.

The term "mixed packaging waste," as used in this text, should be understood as a combination of at least two different types of packaging waste.

The term "PP," as used in this text, should be understood as packaging waste made from polypropylene (PP). Non-limiting examples of types of PP plastic waste are hard bottles and flasks, including bottles and flasks intended to contain laundry products or fabric softeners, as well as other hard packaging, such as, for example, containers, jars, tubs, trays, dishes and lids, including packaging components such as caps, sealing films, lids, labels, additives, etc. Preferably, the packages have been properly emptied, poured empty or scraped empty. The PP plastic waste can be of different sizes. However, individual packages preferably have a volume less than or equal to 8 liters. The packaging preferably qualifies for selective collection of household and equivalent packaging. The PP plastic waste can be colored or not, and in any color.

The term "PET," as used in this text, should be understood as a designation for packaging waste made from polyethylene terephthalate (PET). Non-limiting examples of types of PET plastic waste are bottles and flasks, including bottles and flasks intended to contain beverages, detergents, cleaning products and personal care products, including packaging components such as caps, lids, labels, additives, etc. Other examples of PET plastic waste are PET trays. Preferably, the packages have been properly emptied, poured empty or scraped empty. The PET plastic waste can be of different sizes. However, individual packages preferably have a volume less than or equal to 8 liters. The packaging preferably qualifies for selective collection of household and equivalent packaging. PET plastic waste can be divided into different types according to color and transparency, including PET colorless PET plastic waste that is transparent and has a color of a maximum of 2% light blue, blue PET plastic waste that is transparent and, preferably more than 2% blue-colored, green PET plastic waste that is transparent and green-colored, PET in any other transparent translucent colors, other than colorless, green or blue, and PET in non-translucent or opaque colors, such as opaque white. "Colorless" is understood here to mean without color pigment, but possibly showing a gray tint that can be the result, for example, of the use of reheating additives and/or recycled materials.

The term "PE," as used in this text, should be understood as a designation for packaging waste made of polyethylene (PE) and preferably made of high-density polyethylene (HDPE). Non-limiting examples of types of PE plastic waste are hard bottles and flasks, including bottles and flasks for containing milk and milk beverages, dishwashing and maintenance products, laundry products and fabric softeners, personal care products, bleaches and distilled water, as well as other hard packaging, such as e.g. trays, jars, dishes and lids, including packaging components such as caps, lids, labels, additives, etc. Preferably, the packages have been properly emptied, poured empty or scraped empty. The PE plastic waste can be of different sizes. However, individual packages preferably have a volume less than or equal to 8 liters. The packaging preferably qualifies for selective collection of household and equivalent packaging. The PE plastic waste can be colored or not, and in any color.

The term "PS," as used in this text, should be understood as a designation for packaging waste made from polystyrene (PS). Non-limiting examples of types of PS plastic waste are hard packaging, such as jars, containers, trays, dishes and lids. Preferably, the packages have been properly emptied, poured empty or scraped empty. The PS plastic waste can be of different sizes. However, individual packages preferably have a volume less than or equal to 8 liters. The packaging preferably qualifies for selective collection of household and equivalent packaging. The PS plastic waste can be colored or not, and in any color.

The term "MPO," as used in this text, should be understood as a designation for packaging waste made from mixed polyolefin (MPO). Non-limiting examples of types of MPO plastic are hard packaging, such as hard bottles and flasks, including bottles and flasks intended to contain laundry products, fabric softeners, milk and milk beverages, dishwashing and maintenance products, laundry products and fabric softeners, personal care products, bleaches and distilled water, as well as other hard packaging, such as trays, jars, dishes and lids, including packaging components such as caps, lids, labels, additives, etc. PE and PP form part of MPO which, because of their material, for example color, for example black PP packaging, and bottles in a color other than opaque white, and black PE packaging, are difficult to sort with NIR, and therefore difficult to separate.

The term "optical sorter featuring positive sorting" as used in this text is to be understood as an optical sorter that separates the materials on which the optical sorter is focused.

The term "optical sorter featuring negative sorting" as used in this text is to be understood as an optical sorter that separates the materials on which the optical sorter is not focused.

Quoting numerical ranges by endpoints includes all integers, fractions and/or real numbers between the endpoints, these endpoints included.

In a first aspect, the invention relates to a method for sorting mixed plastic packaging waste comprising PE, PET, PP, PS, MPO and films.

According to a preferred embodiment of the first aspect, the mixed plastic packaging waste is first sorted by means of air classifiers, wherein the air classifiers sort the mixed plastic packaging waste into a lower-density fraction, comprising films, and a higher-density fraction. The higher-density fraction is further sorted on the basis of differences in reflection of electromagnetic radiation, resulting in a PE, PET, PP, PS and MPO fraction and residual mixed plastic packaging waste. PET trays are then sorted out of the PET fraction, comprising PET trays, clear PET, and colored PET by means of an optical sorter. The PET fraction is further sorted by color. Preferably, only the part of the PET fraction that remains after sorting out PET trays is further sorted by color.

Sorting the mixed packaging waste into a lower-density fraction and a higher-density fraction has the advantage of separating films (mainly part of the lower-density fraction) from the mixed plastic packaging waste. Films can cause problems in later steps of the sorting process, wherein the films easily get stuck between moving parts. As a result, the sorting process can be delayed and even blocked.

Separating PET trays from PET fraction ensures targeted recycling of PET trays, which are mainly recycled into PET trays.

According to another embodiment of the first aspect, after separation of the PET fraction, clear PET is separated by means of an optical sorter. PET trays and colored PET are then sorted from the PET fraction.

The order in which PET trays and clear PET are sorted depends on the purity and quality achieved. This mainly depends on the composition of the mixed plastic packaging waste. It is therefore very advantageous that the order of the PET trays and the clear PET can be rearranged to achieve a higher quality, if necessary.

According to a preferred embodiment of the first aspect, clear PET, blue PET and other PET colors are successively separated from the PET fraction, resulting in residual PET.

According to a preferred embodiment of the first aspect, opaque colored PET is separated from the PET fraction by means of an optical sorter.

The measure of further separating PET plastic waste based on color allows a more targeted sorting and subsequent more targeted recycling of PET plastic waste. This is of great importance as certain colors, such as blue, or the absence of color, are a distinguishing characteristic for the applicability of PET plastic packaging material for specific applications.

According to a preferred embodiment of the first aspect, the clear PET, blue PET and other PET colors are further sorted by means of an additional optical sorter, the additional optical sorter separating impurities from the clear PET, blue PET and other PET colors.

By again checking the clear PET, blue PET and other PET colors for impurities, in particular incorrectly sorted materials and food residues, a higher degree of purity is obtained of the sorted clear, blue, other PET colors fraction.

According to a preferred embodiment of the first aspect, the residual mixed PET is further sorted by means of one or more optical sorters into a recycle fraction and a residual fraction, the recycle fraction being combined with the higher-density fraction. The recycle fraction is further supplied to the beginning of the PET sorting process.

This is very advantageous because the recycle fraction gets a second chance to go through the PET sorting process. The second run through the pet sorting process gives the missed PET materials a second chance to be sorted correctly. The residual fraction is then checked again for valuable materials which are then added to the beginning of the sorting process. Missed materials can thus be checked again and sorted correctly.

According to a preferred embodiment of the first aspect, the PE fraction is further sorted by means of one or more air classifiers into a higher- and lower-density fraction. In particular, a distinction is made between low-density PE and high-density PE, wherein the low-density PE mainly comprises films.

According to a preferred embodiment of the first aspect, the PP fraction is further sorted into a two-dimensional fraction and a three-dimensional fraction, by means of a ballistic separator. Here, the two-dimensional fraction mainly comprises films. This has the advantage that the missed films still have a chance to be separated.

Ballistic separators are primarily used to recover materials of similar density but substantially different dimensional properties (other than size). For example, hard plastics (which are usually three-dimensional) can be separated from the films, which are generally two-dimensional.

According to a preferred embodiment of the first aspect, the PS fraction is further sorted, impurities being separated from the PS fraction by means of an optical additional separator. The impurities mainly include food residues, and there is a chance that the impurities include incorrectly sorted materials. Checking the PS fraction again for impurities in this way has the advantage of obtaining a higher degree of purity of the PS fraction.

According to a preferred embodiment of the first aspect, PE, PET, PP and PS are separated from the residual mixed plastic packaging waste, this separated plastic being combined with the start of the PET sorting process.

The advantageous effect is that valuable PE, PET, PP and PS that have not been separated before, for example because of a black color or opaque appearance that makes optical separation difficult, can still be distinguished from the rest of the residual mixed plastic packaging waste.

According to a preferred embodiment of the first aspect, the MPO fraction is separated from the residual mixed plastic packaging waste, resulting in a residual fraction. The MPO fraction is sorted further by means of an additional optical sorter, the additional optical sorter separating impurities from the MPO fraction.

In a second aspect, the invention relates to a device for sorting mixed plastic packaging waste comprising PE, PET, PP, PS, MPO and films.

According to a preferred embodiment of the second aspect, the device comprises one or more air classifiers, suitable for sorting film from the mixed plastic packaging waste. The device further comprises one or more optical sorters, suitable for sorting different types of plastic packaging waste. One or more optical sorters further comprise a color camera, suitable for sorting the mixed plastic packaging waste into different colors. One or more of the one or more optical sorters are suitable for sorting PET trays. The order of the optical sorters for sorting PET trays and clear PET or blue PET and colored PET can optionally be adjusted based on the quality of the sorted PET plastic packaging waste fractions and the composition of the mixed plastic packaging waste, in the case of presence of several optical sorters.

It should be understood that an optical sorter suitable for sorting PET trays is capable of recognizing PET trays, for example on the basis of their shape, and thus being able to sort them. This capability of basic optical recognition is to some extent inherent in any optical sorter.

Air classifiers separate the mixed packaging waste by means of an air stream, whereby the mixed packaging waste can be subdivided into different density fractions by this air stream. The advantage of this is that no use is made of water. In addition, the separation percentage via an air stream is at least 95% with low energy consumption. Furthermore, an air classifier requires little maintenance. It is preferably positioned in front of the optical sorters for sorting out the PET trays, and any other optical sorters for sorting out specific PET subfractions (colored, etc.).

Optical sorters use near-infrared light to detect different types of material based on the surface properties of the material. The surface properties of the material can be determined by measuring the amount of reflected near-infrared light. As a result, an optical sorter can easily distinguish different types of plastic from the mixed plastic packaging waste.

Changing the order of the PET trays and clear PET or blue PET and colored PET plastics to be sorted from the mixed plastic packaging waste is advantageous because depending on the sorted quality (before manual control), or the composition of the incoming mixed plastic packaging waste, a change in order can positively affect the quality.

According to a preferred embodiment of the second aspect, the device further comprises one or more optical sorters featuring negative sorting, suitable for separating impurities from the plastic packaging waste. By using an optical sorter featuring negative sorting for checking a sorted fraction, a higher degree of purity is obtained.

According to a preferred embodiment of the second aspect, the device further comprises one or more ballistic separators, suitable for sorting the mixed plastic packaging waste into a two-dimensional fraction and three-dimensional fraction.

Ballistic separators are primarily used to recover materials of similar density but substantially different dimensional properties (other than size). For example, hard plastics (which are usually three-dimensional) can be separated from the films, which are generally two-dimensional.

According to a preferred embodiment of the second aspect, the device further comprises one or more optical scavengers, suitable for rechecking the residual mixed plastic packaging waste for recyclable plastic packaging waste (PE, PET, PP and PS). These scavengers can be seen as additional optical sorters, which in turn perform another check for PE, PET, PP and PS. This has the advantage that the residual mixed plastic packaging waste is checked again. This gives the materials that were forgotten in the previously described sorting process another chance to be sorted.

In a third aspect, the invention relates to the use of the method according to the first aspect of the invention or the device according to the second aspect of the invention for sorting mixed plastic packaging waste comprising PE, PET, PP, PS, MPO and films.

In what follows, the invention is described by way of non-limiting figures illustrating the invention, and which are not intended to and should not be interpreted as limiting the scope of the invention.

The present invention will now be described in more detail with reference to figures which are not limiting.

### DESCRIPTION OF THE FIGURES

The invention will now be further explained with reference to the following figures, without, however, being limited thereto.

For advantages and technical effects of elements described here in the description of the figures, reference is made to the advantages and technical effects of corresponding elements described above in the description.

A specific embodiment of the present invention relates to a method and device for sorting mixed plastic packaging waste comprising PE, PET, PP, PS, MPO and films.

Figure 1 shows a schematic representation for sorting mixed plastic packaging waste according to an embodiment of the present invention. A device sorts PE, PET, PP, PS, MPO and film from mixed plastic packaging waste.

Mixed plastic packaging waste, comprising PE, PET (including PET trays, clear PET and colored PET), PP, PS MPO and films, is sorted in a number of steps on the basis of material type and on the basis of color. To this end, use is made of a device which consists of a plurality of air classifiers, optical sorters and ballistic separators, which are arranged substantially one after the other.

In a first step, the mixed plastic packaging waste is subdivided into lower-density fractions and higher-density fractions. The lower-density fractions mainly contain films and are further sorted and purified (not shown in the figure). The higher-density fractions are then further sorted on different types of plastic packaging waste.

Optical sorters (1) are designed for this purpose for separating PET from the mixed plastic packaging waste. The PET fraction is then further sorted on the basis of material structure and on the basis of color, wherein PET trays are first sorted from the PET fraction, using an optical sorter (2). The PET fraction is then sorted for clear PET by optical sorter (3), the clear PET fraction being subsequently cleaned by removing impurities by additional optical sorter featuring negative sorting (4). The clear PET fraction is finally checked again manually in sorting room 31, where the clear PET fraction is further sorted if necessary. The material that does not belong in the clear PET fraction is further sorted, giving this material a second chance to be sorted into the correct fractions.

Everything that has been rejected by the optical sorter (3) is then checked by optical sorters (5, 7 and 9) for blue PET, other PET colors and opaque PET. The optical sorters (5, 7 and 9) contain a color camera that makes it possible to further sort the PET fraction into the aforementioned colors. The blue PET fraction and other PET colors fraction are then cleaned by respective additional optical sorters featuring negative sorting (6) and (8) by removing impurities. The blue PET fraction, other PET colors fraction and opaque PET fraction are then taken via a separate means of transport to the sorting room (31) where the fractions are checked manually and further sorted if necessary. Relevant fractions are then stored in respective storage locations (23, 24 and 25).

The plastic packaging waste, which has been rejected in the PET sorting process described above, is then checked again for PET. The separated PET is then sent to an optical sorter (1) where the PET can go through the PET sorting process for a second time.

In a second step, the optical sorter (10) sorts PE from the mixed plastic packaging waste. The PE fraction is then subdivided into a lower-density fraction and a higher-density fraction by air classifier (11). The lower-density fraction is then further sorted (not shown in the figure). The higher-density fraction is then again manually sorted in sorting room (31), with the higher-density fraction containing mainly PE. The PE fraction is then stored in storage location (27). The rejected material in the sorting room (31) is further sorted as previously described.

In a third step, the optical sorter (12) sorts PP from the mixed plastic packaging waste. The PP fraction is then subdivided into a two-dimensional fraction and a three-dimensional fraction by means of a ballistic separator (13). Both fractions are further checked manually in sorting room (31) and further sorted if necessary. All material that is rejected in the sorting room (31) is further sorted as described in previous steps. The two-dimensional fraction is then stored in storage location (32), the two-dimensional fraction consisting of other films, in particular PP films. The three-dimensional fraction, in particular the PP fraction, is then stored in storage location (28).

In a fourth step, optical sorter (14) sorts PS from the mixed plastic packaging waste, resulting in residual mixed plastic packaging waste. The PS fraction is then cleaned by an additional optical sorter featuring negative sorting (15) by separating impurities from the PS fraction. The PS fraction is then manually checked again in sorting room (31) and further sorted if necessary. The rejected material in sorting room (31) and the impurities are further sorted as described above. Finally, the PS fraction is stored in storage location (29).

In a fifth step, optical sorter (16) sorts PE, PP, PS and PET from the residual mixed plastic packaging waste, adding the PE, PP, PS and PET to the infeed of optical sorters (1). The residual mixed plastic packaging waste is then checked again for valuable materials by means of an optical sorter (17), which are finally further sorted (not shown in the figure).

In a sixth step, optical sorter (18) sorts MPO from the residual mixed plastic packaging waste, with additional optical sorter featuring negative sorting (19) sorting the impurities from the MPO fraction. The impurities are then added to the residual fraction. The MPO fraction and the residual fraction are then manually checked again in sorting room (31) and further sorted if necessary. Subsequently, the MPO fraction is stored in storage location (30) and the residual fraction is stored in storage location (26). The rejected material in sorting room (31) is then further sorted as described in previous steps.

In a seventh step, optical sorter (20) can, if necessary, check the residual mixed plastic packaging waste for black plastic. The relevant black fraction is then stored in storage location (34). Everything that has not been sorted after this is checked manually for the last time in sorting room (31) and further sorted if necessary. The rejected material in sorting room (31) is then further sorted, as described in previous steps, where it gets another chance to be sorted into the correct fractions. The residual material is finally added to the residual fraction and stored in storage location (26).

Finally, the fractions from the storage locations are further pressed into bales, where these bales are then stored for later recycling.

## Claims

1. Method for sorting mixed plastic packaging waste comprising PE, PET, PP, PS, MPO and films, wherein the mixed plastic packaging waste is first sorted by means of air classifiers, wherein the air classifiers sort the mixed plastic packaging waste into a lower-density fraction, comprising films, and a higher-density fraction, wherein the higher-density fraction is sorted on the basis of differences in reflection of electromagnetic radiation, resulting in a PE, PET, PP, PS and MPO fraction and residual mixed plastic packaging waste, **characterized in that** the PET fraction, comprising PET trays, clear PET and colored PET, PET trays are sorted out by means of an optical sorter, wherein a resulting PET fraction without PET trays is then further sorted by color.

2. Method according to claim 1, **characterized in that** clear PET, blue PET and other PET colors are successively separated from the resulting PET fraction without PET trays, resulting in residual PET.

3. Method according to claims 1 or 2, **characterized in that** opaque colored PET is separated from the resulting PET fraction without PET trays by means of an optical sorter.

4. Method according to claim 3, **characterized in that** the clear PET, blue PET and other PET colors are further sorted by means of an additional optical sorter, the additional optical sorter separating impurities from the clear PET, blue PET and other PET colors.

5. Method according to claims 2 or 3, **characterized in that** the residual mixed PET is further sorted by means of one or more optical sorters into a recycle fraction and a residual fraction, the recycle fraction being combined with the higher-density fraction.

6. Method according to any of the preceding claims 1-5, **characterized in that** the PE fraction is further sorted by means of one or more air classifiers into a higher- and lower-density fraction.

7. Method according to any of the preceding claims 1-6, **characterized in that** the PP fraction is further sorted into a two-dimensional fraction and a three-dimensional fraction by means of a ballistic separator.

8. Method according to any of the preceding claims 1-7, **characterized in that** the PS fraction is further sorted, impurities being separated from the PS fraction by means of an optical sorter.

9. Method according to any of the preceding claims 1-8, **characterized in that** PE, PET, PP, PS is separated from the residual mixed plastic packaging waste, wherein this separated plastic is combined with the higher-density fraction.

10. Method according to any of the preceding claims 1-9, **characterized in that** the MPO fraction is separated from the residual mixed plastic packaging waste, resulting in a residual fraction, wherein the MPO fraction is further sorted by means of an additional optical sorter, wherein the additional optical sorter separates impurities from the MPO fraction.

11. Device for sorting mixed plastic packaging waste comprising PE, PET, PP, PS, MPO and films, comprising one or more air classifiers, suitable for sorting the mixed plastic packaging waste into a lower-density fraction, comprising films, and a higher-density fraction; multiple optical sorters, suitable for sorting the high-density fraction on the basis of differences in reflection of electromagnetic radiation in a PE, PET, PP, PS and MPO fraction and residual mixed plastic packaging waste **characterized in that** the device comprises one or more optical sorters suitable for sorting out PET trays from a PET fraction on basis of their shape, and one or more optical sorters, comprising a color camera, suitable for sorting the PET fraction without PET trays into different colors.

12. Device according to claim 11, **characterized in that** the device further comprises one or more optical sorters featuring negative sorting, suitable for sorting impurities from the plastic packaging waste.

13. Device according to claims 11 or 12, **characterized in that** the device further comprises one or more ballistic separators, suitable for sorting the mixed plastic packaging waste into a two-dimensional fraction and a three-dimensional fraction.

14. Device according to any of the preceding claims 11-13, **characterized in that** the device further comprises one or more optical scavengers, suitable for checking the residual mixed plastic packaging waste again for recyclable plastic packaging waste (PE, PET, PP, PS and MPO).

15. Use of the method according to any of claims 1-10 or the device according to any of claims 11-14 for sorting mixed plastic packaging waste comprising PE, PET, PP, PS, MPO and films.

## Patentansprüche

1. Verfahren zum Sortieren gemischten Abfalls aus Kunststoffverpackungen, der PE, PET, PP, PS, MPO und Folien umfasst, wobei der gemischte Abfall aus Kunststoffverpackungen zuerst mittels Luftstromsichtern sortiert wird, wobei die Luftstromsichter den gemischten Abfall aus Kunststoffverpackungen in eine Fraktion mit geringerer Dichte, die Folien umfasst, und eine Fraktion mit höherer Dichte sortiert, wobei die Fraktion mit höherer Dichte auf der Grundlage von Differenzen bei der Reflexion elektromagnetischer Strahlung sortiert wird, was zu einer PE-, PET-, PP-, PS- und MPO-Fraktion und restlichem gemischten Abfall aus Kunststoffverpackungen führt, **dadurch gekennzeichnet, dass** die PET-Fraktion, die PET-Schalen, klares PET und farbiges PET umfasst, mittels einer optischen Sortiermaschine sortiert wird, wobei eine entstandene PET-Fraktion ohne PET-Schalen dann weiter nach Farbe sortiert wird.

2. Verfahren nach Anspruch 1, **dadurch gekennzeichnet, dass** klares PET, blaues PET und andersfarbiges PET schrittweise aus der entstandenen PET-Fraktion ohne PET-Schalen aussortiert wird, was zu restlichem PET führt.

3. Verfahren nach Anspruch 1 oder 2, **dadurch gekennzeichnet, dass** mittels einer optischen Sortiermaschine blickdichtes farbiges PET von der entstandenen PET-Fraktion ohne PET-Schalen getrennt wird.

4. Verfahren nach Anspruch 3, **dadurch gekennzeichnet, dass** ferner klares PET, blaues PET und andersfarbiges PET mittels einer weiteren optischen Sortiermaschine sortiert wird, wobei die weitere optische Sortiermaschine Verunreinigungen von dem klaren PET, blauen PET und andersfarbigen PET trennt.

5. Verfahren nach Anspruch 2 oder 3, **dadurch gekennzeichnet, dass** das restliche gemischte PET ferner mittels eines oder mehrerer optischer Sortiermaschinen in eine Recycling-Fraktion und eine restliche Fraktion sortiert wird, wobei die Recycling-Fraktion mit der Fraktion mit höherer Dichte kombiniert wird.

6. Verfahren nach einem der vorhergehenden Ansprüche 1 bis 5, **dadurch gekennzeichnet, dass** die PE-Fraktion ferner mittels einer oder mehrerer Luftstromsichter in eine Fraktion mit höherer und eine Fraktion mit geringerer Dichtet sortiert wird.

7. Verfahren nach einem der vorhergehenden Ansprüche 1 bis 6, **dadurch gekennzeichnet, dass** die PP-Fraktion mittels eines Ballistikseparators in eine zweidimensionale Fraktion und einer dreidimensionale Fraktion sortiert wird.

8. Verfahren nach einem der vorhergehenden Ansprüche 1 bis 7, **dadurch gekennzeichnet, dass** die PS-Fraktion weiter mittels einer optischen Sortiermaschine sortiert wird, wobei Verunreinigungen von der PS-Fraktion getrennt werden.

9. Verfahren nach einem der vorhergehenden Ansprüche 1 bis 8, **dadurch gekennzeichnet, dass** PE, PET, PP, PS von dem restlichen gemischten Abfall aus Kunststoffverpackungen getrennt werden, wobei dieser getrennte Kunststoff mit der Fraktion mit höherer Dichte kombiniert wird.

10. Verfahren nach einem der vorhergehenden Ansprüche 1 bis 9, **dadurch gekennzeichnet, dass** die MPO-Fraktion von dem restlichen gemischten Abfall aus Kunststoffverpackungen getrennt wird, was zu einer restlichen Fraktion führt, wobei die MPO-Fraktion ferner mittels einer weiteren optischen Sortiermaschine sortiert wird, wobei die weitere optische Sortiermaschine Verunreinigungen von der MPO-Fraktion trennt.

11. Vorrichtung zum Sortieren gemischten Abfalls aus Kunststoffverpackungen, der PE, PET, PP, PS, MPO und Folien umfasst, einen oder mehrere Luftstromsichter umfassend, die dazu geeignet sind, den gemischten Abfall aus Kunststoffverpackungen in eine Fraktion mit geringerer Dichte, die Folien umfasst, und eine Fraktion mit höherer Dichte zu sortieren, mehrere optische Sortiermaschinen, die dazu geeignet sind, die Fraktion mit hoher Dichte auf der Grundlage von Differenzen bei der Reflexion elektromagnetischer Strahlung in eine PE-, PET-, PP-, PS- und MPO-Fraktion und restlichem gemischten Abfall aus Kunststoffverpackungen zu sortieren, **dadurch gekennzeichnet, dass** die Vorrichtung eine oder mehrere optische Sortiermaschinen umfasst, die dazu geeignet sind, PET-Schalen auf der Grundlage ihrer Form aus einer PET-Fraktion auszusortieren, und eine oder mehrere optische Sortiermaschinen, die eine Farbkamera umfassen, die dazu geeignet sind, die PET-Fraktion ohne PET-Schalen nach verschiedenen Farben zu sortieren.

12. Vorrichtung nach Anspruch 11, **dadurch gekennzeichnet, dass** die Vorrichtung ferner eine oder mehrere optische Sortiermaschinen umfasst, die negatives Sortieren aufweisen und dazu geeignet sind, Verunreinigungen aus dem Abfall aus Kunststoffverpackungen zu sortieren.

13. Vorrichtung nach Anspruch 11 oder 12, **dadurch gekennzeichnet, dass** die Vorrichtung ferner einen oder mehrere Ballistikseparatoren umfasst, die dazu geeignet sind, den gemischten Abfall aus Kunststoffverpackungen in eine zweidimensionale Fraktion und eine dreidimensionale Fraktion zu sortieren.

14. Vorrichtung nach einem der vorhergehenden Ansprüche 11 bis 13, **dadurch gekennzeichnet, dass** die Vorrichtung ferner eine oder mehrere optische Rückgewinnungsstufen umfasst, die dazu geeignet sind, den restlichen gemischten Abfall aus Kunststoffverpackungen erneut auf recycelbaren Abfall aus Kunststoffverpackungen (PE, PET, PP, PS und MPO) zu prüfen.

15. Verwendung des Verfahren nach einem der Ansprüche 1 bis 10 oder der Vorrichtung nach einem der vorhergehenden Ansprüche 11 bis 14 zum Sortieren gemischten Abfalls aus Kunststoffverpackungen, der PE, PET, PP, PS, MPO und Folien umfasst.

## Revendications

1. Procédé de tri de déchets d'emballages plastiques mixtes comprenant du PE, du PET, du PP, du PS, du MPO et des films, dans lequel les déchets d'emballages plastiques mixtes sont tout d'abord triés au moyen de classificateurs d'air, dans lequel les classificateurs d'air trient les déchets d'emballages plastiques mixtes en une fraction de densité inférieure, comprenant des films, et une fraction de densité supérieure, dans lequel la fraction de densité supérieure est triée sur la base de différences de réflexion de rayonnement électromagnétique, résultant en une fraction PE, PET, PP, PS et MPO et des déchets d'emballages plastiques mixtes résiduels, **caractérisé en ce que** la fraction PET, comprenant des plateaux en PET, du PET clair et du PET coloré, les plateaux en PET sont triés au moyen d'une trieuse optique, dans lequel une fraction PET résultante sans plateaux en PET est ensuite en outre triée par couleur.

2. Procédé selon la revendication 1, **caractérisé en ce que** du PET clair, du PET bleu et du PET d'autres couleurs sont successivement séparés de la fraction PET résultante sans plateaux en PET, résultant en PET résiduel.

3. Procédé selon les revendications 1 ou 2, **caractérisé en ce que** du PET coloré opaque est séparé de la fraction PET résultante sans plateaux en PET au moyen d'une trieuse optique.

4. Procédé selon la revendication 3, **caractérisé en ce que** le PET clair, le PET bleu et le PET d'autres couleurs sont en outre triés au moyen d'une trieuse optique additionnelle, la trieuse optique additionnelle séparant les impuretés du PET clair, du PET bleu et du PET d'autres couleurs.

5. Procédé selon les revendications 2 ou 3, **caractérisé en ce que** le PET mixte résiduel est en outre trié au moyen d'une ou plusieurs trieuses optiques en une fraction de recyclage et une fraction résiduelle, la fraction de recyclage étant combinée à la fraction de densité supérieure.

6. Procédé selon l'une quelconque des revendications précédentes 1 à 5, **caractérisé en ce que** la fraction PE est en outre triée au moyen d'un ou plusieurs classificateurs d'air en une fraction de densité supérieure et inférieure.

7. Procédé selon l'une quelconque des revendications précédentes 1 à 6, **caractérisé en ce que** la fraction PP est en outre triée en une fraction bidimensionnelle et une fraction tridimensionnelle au moyen d'un séparateur balistique.

8. Procédé selon l'une quelconque des revendications précédentes 1 à 7, **caractérisé en ce que** la fraction PS est en outre triée, les impuretés étant séparées de la fraction PS au moyen d'une trieuse optique.

9. Procédé selon l'une quelconque des revendications précédentes 1 à 8, **caractérisé en ce que** le PE, le PET, le PP, le PS sont séparés des déchets d'emballages plastiques mixtes résiduels, dans lequel ce plastique séparé est combiné à la fraction de densité supérieure.

10. Procédé selon l'une quelconque des revendications précédentes 1 à 9, **caractérisé en ce que** la fraction MPO est séparée des déchets d'emballages plastiques mixtes résiduels, résultant en une fraction résiduelle, dans lequel la fraction MPO est en outre triée au moyen d'une trieuse optique additionnelle, dans lequel la trieuse optique additionnelle sépare les impuretés de la fraction MPO.

11. Dispositif de tri de déchets d'emballages plastiques mixtes comprenant du PE, du PET, du PP, du PS, du MPO et des films, comprenant un ou plusieurs classificateurs d'air, appropriés pour trier les déchets d'emballages plastiques mixtes en une fraction de densité inférieure, comprenant des films, et une fraction de densité supérieure ; de multiples trieuses optiques, appropriées pour trier la fraction de densité élevée sur la base de différences de réflexion de rayonnement électromagnétique en une fraction PE, PET, PP, PS et MPO et des déchets d'emballages plastiques mixtes résiduels **caractérisé en ce que** le dispositif comprend une ou plusieurs trieuses optiques appropriées pour trier des plateaux en PET à partir d'une fraction PET sur la base de leur forme, et une ou plusieurs trieuses optiques, comprenant une caméra couleur, appropriées pour trier la fraction PET sans plateaux en PET en différentes couleurs.

12. Dispositif selon la revendication 11, **caractérisé en ce que** le dispositif comprend en outre une ou plusieurs trieuses optiques présentant un tri négatif, appropriées pour trier les impuretés à partir des déchets d'emballages plastiques.

13. Dispositif selon les revendications 11 ou 12, **caractérisé en ce que** le dispositif comprend en outre un ou plusieurs séparateurs balistiques, appropriés pour trier les déchets d'emballages plastiques mixtes en une fraction bidimensionnelle et une fraction tridimensionnelle.

14. Dispositif selon l'une quelconque des revendications précédentes 11 à 13, **caractérisé en ce que** le dispositif comprend en outre un ou plusieurs capteurs optiques, appropriés pour vérifier à nouveau les déchets d'emballages plastiques mixtes résiduels à la recherche de déchets d'emballages plastiques recyclables (PE, PET, PP, PS et MPO).

15. Utilisation du procédé selon l'une quelconque des revendications précédentes 1 à 10 ou du dispositif selon l'une quelconque des revendications précédentes 11 à 14 pour le tri de déchets d'emballages plastiques mixtes comprenant du PE, du PET, du PP, du PS, du MPO et des films.
